# EUROPÄISCHE PATENTANMELDUNG

(11) **EP 0 703 121 A1**
(43) Veröffentlichungstag der Anmeldung: **27.03.1996**
(21) Anmeldenummer: 95113204.2
(22) Anmeldetag: 23.08.1995
(51) Int. Cl.: B60R 21/20

(54) **Fahrerairbagmodul sowie dessen Anordnung**

(30) Priorität: 06.09.1994 DE 4431718
(71) Anmelder: ADAM OPEL AG, D-65423 Rüsselsheim (DE)
(72) Erfinder: Rick, Ulrich, Dipl.-Ing., D-55595 Roxheim (DE); Klenk, Jürgen, Dipl.-Ing., D-65468 Geinsheim (DE)
(74) Vertreter: Kümpfel, Heinz, Dipl.-Ing.

(57) **Zusammenfassung**

Ein Fahrerairbagmodul (7) zum Einbau in ein Lenkrad (1) eines Kraftfahrzeuges hat ein Modulgehäuse (8) aus einem Strangpreßprofil. Das Modulgehäuse (8) weist einen rohrförmigen Raum (9) für einen Gasgenerator (10) auf. Der Raum (9) befindet sich in einer Ecke eines größeren Raumes (11), welcher den gefalteten Airbag (12) aufnimmt. Die Längsachse des Modulgehäuses (8) und damit auch die des Gasgenerators (10) erstrecken sich quer zur Lenkradachse. Die Anordnung eines solchen Airbagmoduls ermöglicht gegenüber bekannten Airbagmodulen eine bessere Gestaltungsfreiheit des Lenkrades bei guter Durchsicht auf die Bordinstrumente. Der Schwerpunkt des Airbagmoduls kann dabei trotzdem auf oder nahe der Lenkradachse liegen. Die Ausführung des Lenkradmoduls ermöglicht eine kostensparende Fertigung.

## Beschreibung

Die Erfindung betrifft ein Fahrerairbagmodul für Kraftfahrzeuge, zumindest umfassend ein Modulgehäuse, einen Airbag, einen Gasgenerator zum Füllen des Airbags und eine Abdeckkappe sowie dessen Anordnung in einem Lenkrad.

Bei den bekannten Fahrerairbagmodulen, wie ein solches z. B. in EP 0 551 732 A1 beschrieben ist, hat der Gasgenerator ein topfförmiges Gehäuse, dessen Rotationsachse parallel zur Rotationsachse des Lenkrades verläuft. Über dem Gehäuse des Gasgenerators ist der gefaltete Airbag angeordnet. Airbag und Gasgenerator sind gemeinsam in einem Blechgehäuse untergebracht, welches im Nabenbereich des Lenkrades eingesetzt ist und mit einer Abdeckkappe abgedeckt ist.

Ein so beschaffenes und angeordnetes Airbagmodul erfordert relativ viel Raum. Damit sind die Gestaltungsmöglichkeiten am Lenkrad stark eingeschränkt. Das Lenkrad wirkt klobig. Die Sicht auf die Fahrzeuginstrumente durch das Lenkrad ist eingeschränkt. Wird das Airbagmodul aus gestalterischen Gründen oder um den Durchblick auf die Instrumente zu verbessern, im Lenkrad außermittig angeordnet, wie dies z. B. aus DE 43 03 774 ersichtlich ist, dann erhöht die Masse des Airbagmoduls das Trägheitsmoment des Lenkrads um die Drehachse erheblich, so daß das Lenkverhalten des Kraftfahrzeuges nachteilig beeinflußt werden kann. Die Herstellungskosten für ein Airbagmodul mit topfförmigem Gehäuse sowie für die dazu verwendeten topfförmigen Gasgeneratoren sind relativ hoch.

Bei einem für ein Beifahrerairbagmodul vorgesehenen Gasgenerator dagegen sind röhrenförmige Gehäuse bekannt, die mit ihrer Längsachse quer zur Fahrtrichtung des Fahrzeuges im Gehäuse des hinter der Instrumententafel befindlichen Beifahrerairbagmoduls angeordnet sind. Ein solches Beifahrerairbagmodul ist mit EP 0 558 240 beschrieben. Dessen Gehäuse besteht im wesentlichen aus einem extrudierten Leichtmetallprofil und zwei an den Stirnseiten dieses Leichtmetallprofils befestigten Deckein. Es bildet eine Kammer für die Aufnahme des röhrenförmigen Gasgenerators sowie eine weitere Kammer für die Aufnahme des Airbags, wobei die beiden Kammern etwa gleich hoch und hintereinander angeordnet sind. Eine derartige Bauweise vereinfacht die Herstellung eines Airbagmoduls gegenüber einer solchen mit topfförmigem Gehäuse, so daß damit das Airbagmodul preiswerter angeboten werden kann. Ein solches Airbagmodul läßt sich zwar gut hinter einer Instrumententafel anordnen. Für die Verwendung als Fahrerairbag ist es jedoch infolge seiner Abmessungen, insbesondere in der Tiefe, nicht geeignet.

Der Erfindung liegt die Aufgabe zugrunde, ein Fahrerairbagmodul zu schaffen, welches gegenüber anderen im Lenkrad angeordneten Airbagmodulen eine relativ freie Formgestaltung des Lenkrades ermöglicht, das Massenträgheitsmoment um die Drehachse nur unwesentlich erhöht und kostengünstig herstellbar ist.

Erfindungsgemäß wird diese Aufgabe dadurch gelöst, daß ein mit dem Lenkrad verbundenes Modulgehäuse einen ersten Raum für einen rohrförmigen Gasgenerator, dessen Mittelachse quer zur Achse des Lenkrades verläuft und einen parallel zum ersten Raum angeordneten zweiten Raum für einen gefalteten Airbag aufweist, beide Räume durch eine mit Gasdurchtrittsöffnungen versehene Wand getrennt sind, wobei der zweite Raum sich sowohl in der Lenkradebene seitlich als auch senkrecht zur Lenkradebene in Richtung zum Fahrer hin neben dem ersten Raum erstreckt und zum Fahrer hin mit einer unter dem Druck des sich öffnenden Airbags berstenden Abdeckkappe verschlossen ist.

Bei einem solchen Airbagmodul liegt der Massenschwerpunkt nahe dem außermittig angeordneten Gasgenerator. Wenn dieser Massenschwerpunkt nun nahe der Drehachse des Lenkrades angeordnet wird, dann wird dadurch das Massenträgheitsmoment der Baueinheit Lenkrad/Fahrerairbagmodul gegenüber dem Lenkrad allein nur geringfügig vergrößert. Das bedeutet, daß negative Auswirkungen auf das Lenkverhalten durch ein solches Fahrerairbagmodul nicht ausgelöst werden. Durch die in der Höhe asymmetrische Anordnung des Gasgenerators im Airbaggehäuse wird zumindest bei Geradeausfahrt auch der Durchblick durch das Lenkrad auf die Instrumente nicht behindert, obwohl der Massenschwerpunkt des Airbagmoduls in der Drehachse des Lenkrads liegt.

In besonders vorteilhafter Weise ist das Modulgehäuse als Abschnitt eines extrudierten Profils ausgeführt, welches im wesentlichen im Querschnitt einem über einem flachen Rechteck angeordneten U entspricht und in einer Ecke des U-förmigen Querschnitts einen rohrartigen Teilquerschnitt aufweist, der einen Raum für die Aufnahme des Gasgenerators und der verbleibende Querschnitt einen Raum für die Aufnahme des gefalteten Airbags bildet, die Wand zwischen den Räumen mit Gasdurchtrittsöffnungen versehen ist, beiderseits des den Raum für die Aufnahme des Gasgenerators bildenden Teilquerschnitts Nuten zur Befestigung des Airbags eingeformt sind, an den Stirnseiten des Profilabschnittes Deckel befestigt sind, und die zum Fahrer weisende Öffnung mit einer in Haltenuten des Profils eingeklipsten Abdeckkappe verschlossen ist. Das Profil kann vorzugsweise als Leichtmetallprofil hergestellt sein.

Der für die Aufnahme des Gasgenerators vorgesehene Raum ist vorzugsweise mit einer räumlichen Kammerausbuchtung über seine gesamte Länge versehen, von der ab die Gasdurchtrittsöffnungen zu dem den Airbag aufnehmenden Raum führen.

Ein Ausführungsbeispiel der Erfindung ist nachstehend anhand einer Zeichnung näher beschrieben. Es zeigen
- Fig. 1:: ein Lenkrad eines Kraftfahrzeuges mit einem darin integrierten Airbagmodul;
- Fig. 2:: einen Schnitt entlang der Linie A-A in Figur 1;
- Fig. 3:: das Airbagmodul nach Figur 2 im Schnitt vergrößert.

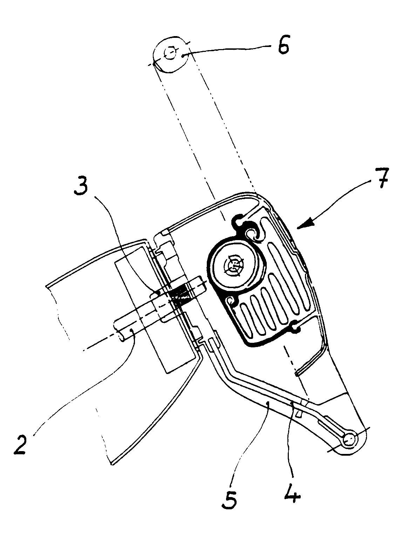

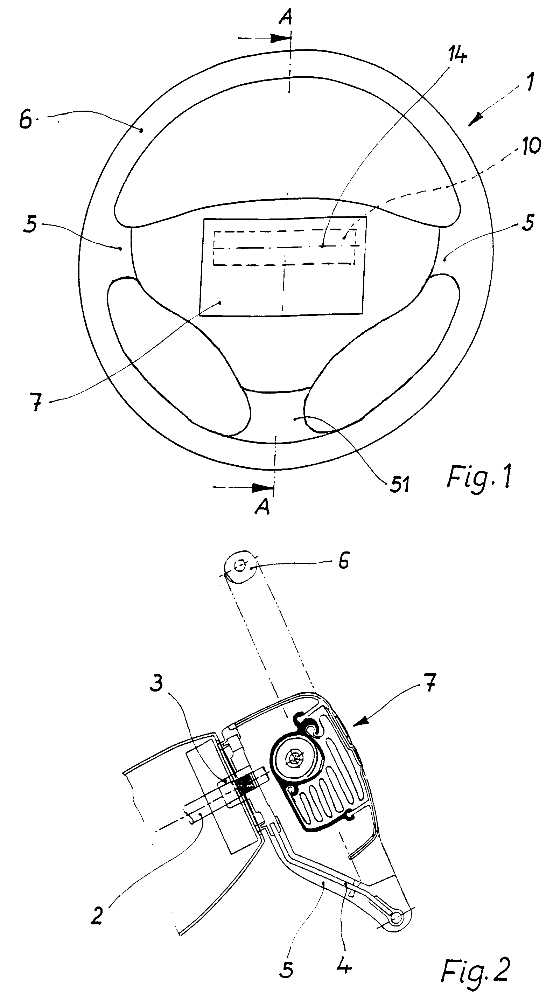

Ein Lenkrad 1, bestehend aus einer mit der Lenkspindel 2 verbundenen Nabe 3, Speichen 5 und einem Lenkradkranz 6 trägt oberhalb der Nabe 3 in Richtung der Achse der Lenkspindel 2 ein Airbagmodul 7, welches mit dem Skelett 4 des Lenkrades 1 fest verbunden ist. Das Airbagmodul 7 besteht aus einem Modulgehäuse 8 mit einem ersten Raum 9 zur Aufnahme eines rohrförmigen Gasgenerators 10 und einem zweiten Raum 11 zur Aufnahme eines gefalteten Airbags 12 sowie einer Abdeckkappe 13. Das Modulgehäuse 8 weist in der Draufsicht eine rechteckige Form auf und erstreckt sich mit seiner Längsachse parallel zur Lenkradebene. Der rohrförmige Gasgenerator 10 ist darin so angeordnet, daß dessen Mittelachse 14 ebenfalls parallel zur Lenkradebene, und zwar senkrecht zu einer Mittelspeiche 51, ausgerichtet ist. Im Querschnitt (Figur 2 und Figur 3) bildet das Modulgehäuse 8 im wesentlichen ein flaches U, dessen Boden 15 der Nabe 3 zugewandt ist und dessen beide Schenkel 16 und 17 sich zum Fahrgastraum hin erstrecken. In einer zwischen dem einen Schenkel 16 und dem Boden 15 gebildeten Ecke ist der Raum 9 angeordnet, der im wesentlichen einen runden Querschnitt aufweist. Der verbleibende Raum 11 ist ausgefüllt mit dem gefalteten Airbag 12, dessen Randbegrenzungen 18 mit dem Modulgehäuse 8 an den Seiten des Raumes 9 befestigt sind. Dazu sind Nuten 19 entlang der Seiten des Raumes 9 im Modulgehäuse 8 eingeformt, in welche die Randbegrenzungen 18 von der Stirnseite des Modulgehäuses 8 einsteckbar sind. Eine Wand 20 zwischen den Räumen 9 und 11 ist mit Gasdurchtrittsöffnungen 21 versehen.

In dem Raum 9 befindet sich ein an sich bekannter zylindrischer Gasgenerator 10, an dessen Umfang bei Aktivierung Gas unter Druck ausströmt. Dieses Gas kann sich über eine entlang des Raumes 9 verlaufende Kammerausbuchtung 23 verteilen und durch die Gasdurchtrittsöffnungen 21 in den im Raum 11 befindlichen Airbag 12 gelangen. Das Airbagmodul 7 ist zum Fahrer hin durch die Abdeckkappe 13 verschlossen. Sie ist in an sich bekannter Weise mit Sollbruchstellen 25 versehen, die bei Aktivierung durch den sich entfaltenden Airbag 12 aufbrechen, so daß die Abdeckkappe 13 eine Öffnung zum Fahrer freigibt, durch die sich der Airbag 12 zum Fahrer hin entfalten kann. Befestigt ist die Abdeckkappe 13 durch Einbringen in Haltenuten 26. Das Modulgehäuse 8 besteht aus einem Leichtmetallprofilabschnitt, das als Strangpreßprofil hergestellt ist und an den beiden Stirnseiten durch Deckel abgeschlossen ist. An den Deckeln befinden sich die Befestigungselemente zur Halterung des Airbagmoduls 7 am Skelett 4 des Lenkrades 1.

Es versteht sich, daß das Modulgehäuse 8 ebenso aus anderen Werkstoffen hergestellt und auch als Blechkonstruktion ausgeführt sein kann.

Ein so ausgebildetes Airbagmodul kann infolge der asymmetrischen Anordnung des Gasgenerators mit seinem Schwerpunkt näher an die Drehachse des Lenkrades gebracht werden als bekannte Airbagmodule, ohne daß dabei der Durchblick durch das Lenkrad auf die Fahrzeuginstrumente verdeckt wird. Die Form des Airbagmoduls als langgestreckter flacher Körper ermöglicht ein relativ zierliches Lenkraddesign mit freier Auswahl hinsichtlich der üblichen Speichenanzahl.

Durch Verwendung von extrudierten Profilen für die Herstellung des Modulgehäuses 8 und die durch Einpressen in den Raum 9 besonders einfache Befestigung des Gasgenerators 10 kann das Airbagmodul auch besonders kostengünstig hergestellt werden.

## Patentansprüche

1. Fahrerairbagmodul für Kraftfahrzeuge, zumindest umfassend ein Modulgehäuse, einen Airbag, einen Gasgenerator zum Füllen des Airbags und einer Abdeckkappe sowie dessen Anordnung in einem Lenkrad, **dadurch gekennzeichnet**, daß ein mit dem Lenkrad (1) verbundenes Modulgehäuse (8) einen ersten Raum (9) für einen rohrförmigen Gasgenerator (10), dessen Mittelachse (14) quer zur Achse des Lenkrades (1) verläuft und einen parallel zum ersten Raum (9) angeordneten zweiten Raum (11) für einen gefalteten Airbag (12) aufweist, beide Räume (9, 11) durch eine mit Gasdurchtrittsöffnungen (21) versehene Wand (20) getrennt sind, wobei der zweite Raum (11) sich sowohl in der Lenkradebene seitlich als auch senkrecht zur Lenkradebene in Richtung zum Fahrer hin neben dem ersten Raum (9) erstreckt und zum Fahrer hin mit einer unter dem Druck des Airbags (12) berstenden Abdeckkappe (13) verschlossen ist.

2. Fahrerairbagmodul nach Anspruch 1, **dadurch gekennzeichnet**, daß das Modulgehäuse (8) als Abschnitt eines extrudierten Profils ausgeführt ist, welches im wesentlichen im Querschnitt einem über einem flachen Rechteck angeordneten U entspricht und in einer Ecke des U-förmigen Querschnittes einen rohrartigen Teilquerschnitt aufweist, der einen Raum (9) für die Aufnahme des Gasgenerators (10) und der verbleibende Querschnitt einen Raum (11) für die Aufnahme des gefalteten Airbags (12) bildet, die Wand (20) zwischen dem Raum (9) und dem Raum (11) mit Gasdurchtrittsöffnungen (21) versehen ist, beiderseits des den Raum (9) für die Aufnahme des Gasgenerators (10) bildenden Teilquerschnitts Nuten (19) zur Befestigung der Randbegrenzungen (18) des Airbags (12) eingeformt sind, an den Stirnseiten des Profilabschnittes Deckel befestigt sind und die zum Fahrer weisende Öffnung mit einer in Haltenuten (26) des Profils eingebrachten Abdeckkappe (13) verschlossen ist.

3. Fahrerairbagmodul nach Anspruch 1 und 2, **dadurch gekennzeichnet**, daß der für die Aufnahme des Gasgenerators (10) vorgesehene Raum (9) über seine gesamte Länge mit einer räumlichen Kammerausbuchtung (23) versehen ist, von der aus die Gasdurchtrittsöffnungen (21) zu dem den Airbag (12) aufnehmenden Raum (11) führen.

4. Fahrerairbagmodul nach Anspruch 1 bis 3, **dadurch gekennzeichnet**, daß das Profil ein Leichtmetallprofil ist.
